**Europäisches Patentamt**

(19) **European Patent Office**

**Office européen des brevets**

(11) Veröffentlichungsnummer: **0 015 485**
**B1**

(12) # EUROPÄISCHE PATENTSCHRIFT

(45) Veröffentlichungstag der Patentschrift:
15.06.83

(51) Int. Cl.³: **H 01 F 1/06, B 22 F 9/22**

(21) Anmeldenummer: **80100948.1**

(22) Anmeldetag: **26.02.80**

(54) **Ferromagnetisches, im wesentlichen aus Eisen bestehendes Metallpulver und Verfahren zu dessen Herstellung.**

(30) Priorität: **10.03.79 DE 2909480**

(43) Veröffentlichungstag der Anmeldung:
**17.09.80 Patentblatt 80/19**

(45) Bekanntmachung des Hinweises auf die Patenterteilung:
**15.06.83 Patentblatt 83/24**

(84) Benannte Vertragsstaaten:
**BE DE FR GB IT NL**

(56) Entgegenhaltungen:
**EP-A-0 003 100**
**DE-A-1 902 270**
**FR-A-2 359 884**
**GB-A-1 511 379**
**US-A-4 007 072**

(73) Patentinhaber: **BAYER AG, Zentralbereich Patente,
Marken und Lizenzen, D-5090 Leverkusen 1, Bayerwerk
(DE)**

(72) Erfinder: **Schroeder, Gerhard, Dr., Scheiblerstrasse 85,
D-4150 Krefeld (DE)**
Erfinder: **Buxbaum, Gunter, Dr., Holzapfelweg 2,
D-4150 Krefeld (DE)**
Erfinder: **Hund, Franz, Dr., Scheiblerstrasse 89,
D-4150 Krefeld (DE)**
Erfinder: **Schopper, Heinrich-Christian, Dr.,
Glindholzstrasse 95A, D-4150 Krefeld (DE)**
Erfinder: **Naumann, Rolf, Dr., Buschstrasse 165,
D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Ferromagnetisches, im wesentlichen aus Eisen bestehendes Metallpulver und Verfahren zu dessen Herstellung

Die vorliegende Erfindung betrifft ein ferromagnetisches Metallpulver für magnetische Aufzeichnungszwecke gemäß dem ersten Teil des Anspruchs 1, das im wesentlichen aus Eisen besteht und sich durch gut ausgebildete nadelförmige Teilchen und überlegene Eigenschaften als Aufzeichnungsträger auszeichnet, sowie ein Verfahren zur Herstellung derartigen Materials.

Allgemeines Ziel der Entwicklung neuer magnetischer Materialien für Aufzeichnungszwecke ist das Erreichen wesentlich höherer Speicherdichten, was durch Einsatz von Materialien mit höherer Koerzitivkraft und Sättigungsmagnetisierung erreicht werden kann. Die Entwicklung des — theoretisch an sich idealen — Metalldünnschichtbandes hat wegen der bisher nicht überwundenen Schwierigkeiten bei der Fertigung — speziell mechanische Eigenschaften, Oberflächenqualität und Korrosionsprobleme — noch nicht zum Ziel geführt. Ein Teil der Schwierigkeiten kann durch die Verwendung geeigneter metallischer Magnetpulver umgangen werden, ohne dabei auf den wesentlichen Vorteil des gegenüber den oxidischen Materialien höherer Energieproduktes verzichten zu müssen.

Für die Herstellung magnetischer Metallpulver werden in der Literatur mehrere Verfahren beschrieben, von denen die wichtigsten in vier Gruppen zusammengefaßt werden können:

— Die elektrolytische Abscheidung von Metallpulvern aus den entsprechenden Salzlösungen an einer Quecksilberkathode (z. B. US-PS 29 74 104 und US-PS 29 88 466).
— Die Herstellung von Metallpulvern durch thermische Zersetzung der entsprechenden Metallcarbonyle (gegebenenfalls im Magnetfeld, um anisometrische Teilchen zu erhalten). (z. B. US-PS 25 97 701 und GB-PS 695 925).
— Die Herstellung von Metallpulvern aus den Lösungen der entsprechenden Metallionen durch Reduktion mit Hilfe ebenfalls gelöster Reduktionsmittel wie Boranat, Hypophosphit usw. (gegebenenfalls im Magnetfeld, um anisometrische Teilchen zu erhalten). (z. B. US-PS 3 206 338, US-PS 3 607 218).
— Die Herstellung von Metallpulvern aus den entsprechenden Oxiden, Oxidhydroxiden, Oxalaten, Formiaten usw. durch Reduktion mit gasförmigen Reduktionsmitteln (üblicherweise Wasserstoff) bei Temperaturen über 250°C. (z. B. US-PS 2 879 154, US-PS 290 246).

Dieses letztgenannte Verfahren erlaubt es in gewissen Grenzen, Teilchenform und -größe sowie deren Verteilungen durch eine entsprechende Wahl bzw. Ausbildung der Ausgangsverbindungen, insbesondere der Oxide und Oxidhydroxide zu beeinflussen.

Aus derartigen Oxiden hergestellte Metallpulver sind im allgemeinen bezüglich Teilchenform und -größe wenig einheitlich. Außerdem sind die dabei erhaltenen, als »Metallnadeln« bezeichneten Metallteilchen stark in einzelne »Metallkerne« gegliedert. Aus beidem resultiert ein negativer Einfluß auf die magnetischen und elektroakustischen Eigenschaften. Die Auflösung der kompakten Nadelform ist durch den hohen Volumenschwund bedingt, der, z. B. ausgehend vom nadelförmigen $\alpha$-FeOOH, bis zum Metall etwa 60% beträgt. Etwa die Hälfte des Volumenschwundes tritt bereits bei der Entwässerung des $\alpha$-FeOOH zum $\alpha$-Fe$_2$O$_3$ und der anschließenden Reduktion zum Fe$_3$O$_4$ auf, so daß bereits diese oxidischen Zwischenprodukte stark porenhaltig anfallen.

Koerzitivkraft und Remanenz magnetischer Teilchen sind bekanntermaßen (Kneller, Ferromagnetismus, Kap. 19, Kap. 27, Kap. 28, Springer-Verlag, Berlin 1962) stark von der Teilchengeometrie abhängig. Speziell die Koerzitivkraft ($H_c$) kann daher prinzipiell bereits durch die Wahl der Teilchengröße an der anisometrischen Vorläuferverbindung — z. B. am $\alpha$-FeOOH, $\beta$-FeOOH oder $\gamma$-FeOOH — vorgegeben werden. In der Praxis jedoch stößt der Versuch, z. B. die Koerzitivkraft der Metallteilchen über eine Einstellung der Kristallitgröße am $\alpha$-FeOOH zu erreichen, besonders dann auf Schwierigkeiten, wenn, ausgehend von z. B. sehr feinem $\alpha$-FeOOH, hohe Koerzitivkräfte am Eisen eingestellt werden sollen, ohne mit Kobalt zu dotieren. Die starke Zergliederung der nach bekannten Verfahren erhaltenen Teilchen zeigte sich auch in einem niedrigen Quotienten aus Remanenz und Sättigungsmagnetisierung $B_R/B_s$ von unterhalb 0,5.

Gegenstand der vorliegenden Erfindung ist daher ein im wesentlichen aus Eisen bestehendes Metallpulver für die magnetische Signalaufzeichnung, bestehend aus nadelförmigen Einzelteilchen einer Länge von 0,1 bis 2 $\mu$, vorzugsweise von 0,3 bis 1 $\mu$, mit einem Durchmesser von 0,02 bis 0,15 $\mu$, vorzugsweise 0,03 bis 0,1 $\mu$, wobei das Verhältnis von länge zu Durchmesser zwischen 5 und 20 liegt, das dadurch gekennzeichnet ist, daß die nadelförmigen Einzelteilchen durchschnittlich nicht mehr als eine Pore aufweisen.

Figur 1 zeigt eine elektronenmikroskopische Abbildung der erfindungsgemäßen Metallnadeln.

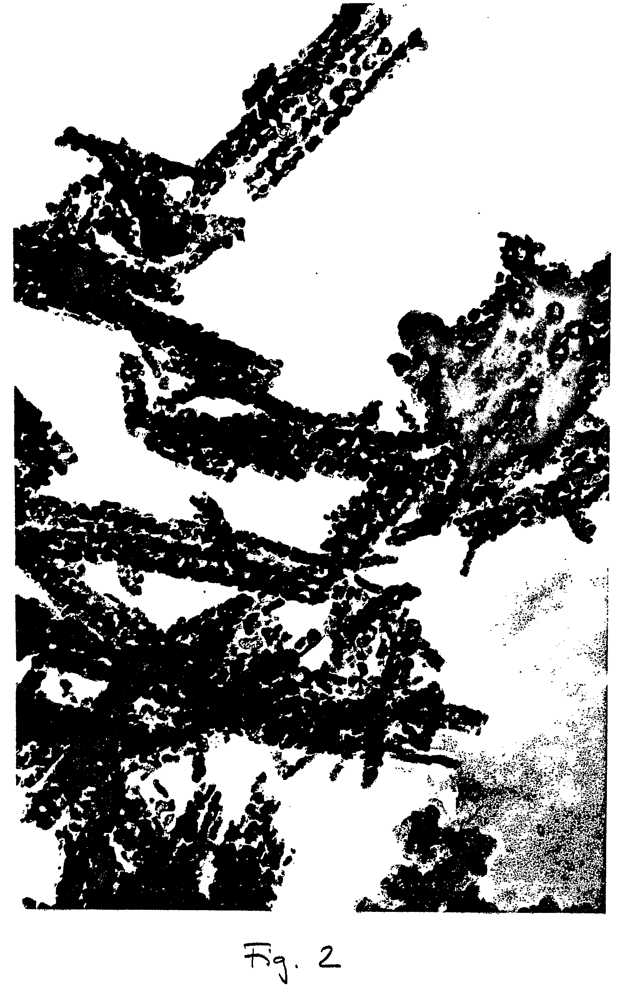

Figur 2 zeigt porenreiche, in eine Vielzahl einzelner Metallkerne zergliederte Nadeln nach dem Stand der Technik in derselben Vergrößerung wie Figur 1.

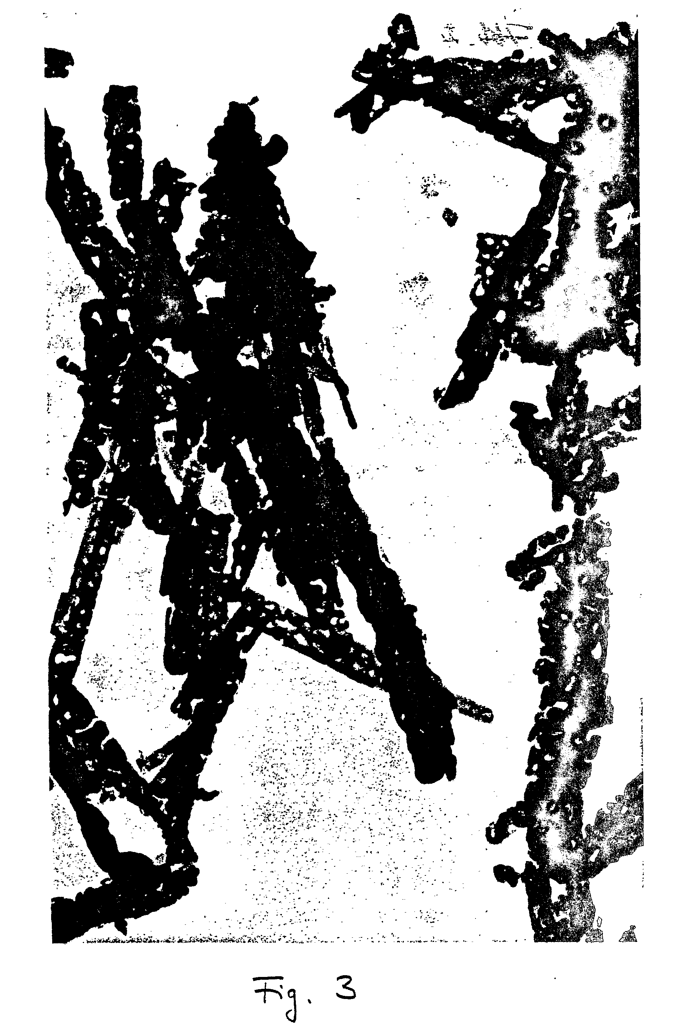

Figur 3 zeigt ebenfalls Metallnadeln nach dem Stand der Technik, wobei die Zergliederung entsprechend einem Reduktionsgrad von nur 80 bis 90% geringer ist.

Die aus elektronenmikroskopischen Aufnahmen ermittelte Länge der einzelnen Nadeln beträgt zwischen 0,1 und 2 µ, vorzugsweise 0,3 bis 1 µ. Der Durchmesser der Nadeln liegt etwa zwischen 0,02 und 0,15 µ, vorzugsweise zwischen 0,03 und 0,1 µ, wobei das Verhältnis von Länge zu Durchmesser zwischen 5 und 20 liegt.

Die erfindungsgemäßen Metallpulver haben Koerzitivkräfte von 56 000 – 104 000 A/m (750 bis 1300 Oe) oder darüber. Erheblich höhere Koerzitivfeldstärken können erreicht werden, wenn die im wesentlichen aus Eisen bestehenden Metallpulver beispielsweise Kobalt enthalten. Metallpulver mit Koerzitivfeldstärken zwischen 72 000 – 96 000 A/m (900 und 1200 Oe) stellen einen Bereich dar, dessen Erschließung für die technische Anwendung durch Entwicklung von entsprechenden Aufnahme- und Wiedergabeköpfen bei hochwertigen Audio- und Vidiobändern derzeit bearbeitet wird.

Bevorzugte Metallpulver enthalten zwischen 0,1 und 7 Gew.-% mindestens eines der Elemente Cadmium, Blei, Calcium, Zink, Magnesium, Aluminium, Chrom, Wolfram, Phosphor (gerechnet als $P_2O_5$) und/oder Bor (gerechnet als $B_2O_3$). Besonders bevorzugt sind Metallpulver mit einem Gehalt von je 0,1 bis 4 Gew.-% $P_2O_5$ und/oder Zink.

Die erfindungsgemäßen Metallpulver zeichnen sich ferner durch ein überlegenes Rechteckigkeitsverhältnis, gekennzeichnet durch ein Verhältnis $B_r/4_\pi B_s$ von oberhalb 0,55, vorzugsweise oberhalb 0,6 bei einem Feld von 0,28 MA/m (3500 Oe) aus.

Gegenstand der vorliegenden Erfindung ist auch ein Verfahren zur Herstellung des im wesentlichen aus Eisen bestehenden Metallpulvers für die magnetische Signalaufzeichnung nach einem der Ansprüche 1 bis 4, das dadurch gekennzeichnet ist, daß porenarmes nadelförmiges ferrimagnetisches strukturell stabilisiertes Eisenoxid bei Temperaturen zwischen 300 und 600° C mit einem gasförmigen Reduktionsmittel zum Metall reduziert wird.

Zur Erzeugung des strukturell stabilisierten Eisenoxids wird zunächst in bekannter Weise Eisen(III)-oxidhydroxid hergestellt; vgl. auch EP-A-0 003 100. Das Eisenoxidhydroxid wird jedoch erfindungsgemäß durch Behandlung mit anorganischen Verbindungen gegen Versinterung bei nachfolgenden Temperaturbehandlungen geschützt. Die Behandlung kann durch gleichzeitige Fällung von Ionen, z. B. des Cadmium, Blei, Magnesium, Calcium, Zink, Aluminium, Chrom und/oder Wolfram und/oder von $B_2O_3$ oder $P_2O_5$ erfolgen. Die Ionen werden als wasserlösliche Verbindungen, z. B. der Mineralsäuren, wie Salze der Schwefelsäure, in die Fällungssuspension eingeführt. Dabei sind Mengen zwischen 0,1 und 7 Gew.-% der Behandlungssubstanzen, bezogen auf das Eisen, ausreichend. Die Behandlung kann auch nach abgeschlossener Fällung des Eisenoxidhydroxids durch Auffällung auf die FeOOH-Teilchen erfolgen. Die Auffällung soll dann in der Fällungssuspension erfolgen. Bevorzugt werden Zink- und/oder Phosphationen eingesetzt.

Die Fällung und Oxidation kann einstufig oder mehrstufig erfolgen, indem zunächst $\alpha$-FeOOH-Keime gefällt werden und danach entweder durch weitere Zugabe von Eisensalzen oder nach dem Pennimanverfahren ein Pigmentwachstum durchgeführt wird. Ein besonders bevorzugtes einstufiges Verfahren besteht darin, daß Fällung und Oxidation in Gegenwart von Zinkionen und gegebenenfalls Phosphationen bei einem pH-Wert unter 7 durchgeführt werden, bei Erreichen eines pH-Wertes von <4 die Oxidation abgebrochen wird und das erhaltene Zink und gegebenenfalls Phosphat enthaltende $\alpha$-FeOOH vor der Abtrennung aus der Fällungssuspension mit Alkaliphosphaten, vorzugsweise Pyrophosphaten gegen Versinterung behandelt wird.

Dabei verfährt man z. B. so, daß zu einer 80 bis 120 g Eisensulfat pro Liter enthaltenden Lösung eine 0,3 bis 3 Gew.-% Zink (bezogen auf FeOOH) entsprechende Menge an Zinksulfat zugesetzt wird, dieser Lösung soviel Alkalilösung, die gegebenenfalls eine 0,1 bis 1,5 Gew.-% $P_2O_5$ bezogen auf FeOOH entsprechende Menge $NaH_2PO_4 \cdot 2 H_2O$ enthalten kann, zugesetzt wird, daß ein Ausfällungsgrad von 50 bis 75% des Eisen-(II) erreicht wird. Das ausgefällte basische Eisen-(II)-salz wird unter intensivem Rühren durch Hindurchleiten von 2 bis 8 Liter Luft oder mit Sauerstoff angereicherter Luft pro Stunde und Liter Fällungslösung bei Temperaturen zwischen 40 und 80° C oxidiert, bis die Suspension eine gelbgrüne Färbung angenommen hat. In der so enthaltenen $\alpha$-FeOOH-Suspension erfolgt zum Schutz gegen Versinterung durch langsamen Zusatz einer entsprechenden Menge Phosphatlösung, z. B., Pyrophosphat, eine Auffällung von Eisenphosphat.

Die auf diese Weise gewonnenen $\alpha$-FeOOH-Teilchen werden eine röntgenographische mittlere Kristallitgröße von 12 vis 22 Nanometer auf, wobei die Kristallitgröße des $\alpha$-FeOOH durch geeignete Wahl des Augenblicks des Abbruchs der $\alpha$-FeOOH-Bildung eingestellt werden kann.

Größere $\alpha$-FeOOH-Teilchen werden z. B. durch ein zweistufiges Verfahren erhalten. Hierbei wird die wie oben beschrieben erhaltene $\alpha$-FeOOH-Suspension als Keimsuspension eingesetzt. Der Keimsuspension wird eine Eisensulfat und Zinksulfat enthaltende Lösung zugesetzt und die Temperatur auf 80° erhöht. Durch langsame Zugabe von Natronlauge unter weiterem Einblasen von Luft findet dann ein Keimwachstum statt, wobei $\alpha$-FeOOH-Teilchen mit einer röntgenographischen Kristallitgröße von 20 bis 32 Nanometer erhalten werden. Daran schließt sich dann die Auffällung von Eisenphosphat wie oben an.

Über die Einstellung der $\alpha$-FeOOH-Teilchengröße wird die Koerzitivkraft des schließlich herzustellenden Metallpulvers eingestellt. Das einstufige Verfahren eignet sich zur Herstellung von Metallpulvern mit Koerzitivfeldstärken oberhalb 64 000 A/m (800 Oe), z. B. oberhalb 79 600 A/m (1000 Oe). Dagegen eignet sich das zweistufige Verfahren für die Herstellung von niederkoerzitiven Metallpulvern mit Koerzitivkräften zwischen 40 000 und 80 000 A/m (500 und 1000 Oe).

Wesentlich für die Herstellung der erfindungsgemäßen Metallpulver mit porenarmen Einzelteilchen ist, daß die Reduktion zu Metall nicht in einer Stufe erfolgt, sondern daß das $\alpha$-FeOOH zunächst in porenarmes ferrimagnetisches Eisenoxid überführt wird und als solches stabilisiert wird.

Für die Überführung in porenarmes ferrimagnetisches Eisenoxid und dessen strukturelle Stabilisierung können verschiedene Verfahrensvarianten eingesetzt werden.

Nach einer Verfahrensvariante wird das $\alpha$-FeOOH nach dem Abfiltrieren aus der Fällungssuspension und sulfatfrei-Waschen bei Temperaturen wenig oberhalb 100°C getrocknet und bei Temperaturen zwischen 215 und 400°C entwässert. Das so erhaltene $\alpha$-Fe$_2$O$_3$ wird bei Temperaturen zwischen 600 und 900°C, beispielsweise 650 bis 850°C während 0,5 bis 2 Stunden getempert und anschließend im feuchten Wasserstoffstrom bei Temperaturen zwischen 400 und 500°C zum Fe$_3$O$_4$ reduziert. Die Stabilisierung erfolgt durch weitere Temperung unter inerten Bedingungen bei Temperaturen zwischen 600 und 800°C. die Temperung kann unter Edelgasen, Stickstoff oder Kohlendioxid erfolgen. Vorteilhaft wird ein Gemisch aus Stickstoff und Kohlendioxid eingesetzt. Vorteilhaft ist ein Sauerstoffgehalt im Inertgas, der dem Sauerstoffpartialdruck von Kohlendioxid bei der Behandlungstemperatur entspricht. Vorteilhaft umfaßt die Stabilisierung eine zumindest partielle Reoxidation zum $\gamma$-Fe$_2$O$_3$.

Bei Einsatz von Zn- und Phosphat-stabilisierter $\alpha$-FeOOH-Teilchen kann eine Reoxidation im allgemeinen unterbleiben.

Bein Einsatz anderer FeOOH-Teilchen kann es zweckmäßig sein, nach der Reduktion zum Fe$_3$O$_4$ eine Reoxidation zum $\gamma$-Fe$_2$O$_3$ auszuschließen. Das $\gamma$-Fe$_2$O$_3$ kann mit Vorteil zunächst wieder zum Fe$_3$O$_4$ mit anschließender Temperung unter Inertgas reduziert werden. Je nach dem eingesetzten FeOOH kann es notwendig sein, den Reoxidations-Reduktions-Vorgang mehrfach zu wiederholen. Auch bei beliebig auf andere Weise gewonnenem FeOOH sind jedoch im allgemeinen zwei solche Zyklen ausreichend.

Das so erhaltene strukturell stabilisierte porenarme ferrimagnetische Eisenoxid wird bei Temperaturen zwischen 300 und 600°C mit einem gasförmigen Reduktionsmittel, z. B., trockenem Wasserstoff, zum Metall reduziert.

Nach einer anderen Verfahrensvariante wird das $\alpha$-FeOOH durch hydrothermale Behandlung in porenarmes ferrimagnetisches Eisenoxid überführt und strukturell stabilisiert. Hiernach wird das $\alpha$-FeOOH nach Abtrennung von der Fällungssuspension und sulfatfrei-Waschung in Gegenwart von Mono-, Di- oder Trisacchariden und Alkali- und/oder Erdalkalihydroxid bzw. -carbonat, sowie ferner in Gegenwart überschüssigen Wassers in einem Autoklaven auf Temperaturen oberhalb 100°C, vorzugsweise oberhalb 200°C, z. B. zwischen 250 und 500°C erhitzt. Die Behandlung kann sich über eine Dauer von 10 Minuten bis 5 Stunden, z. B. etwa 2 Stunden, erstrecken.

Als Monosaccharide können Arabinose, Xylose, Ribose, Glukose, Galaktose, Manose oder Fructose eingesetzt werden. Als Di- oder Trisaccharide können Rohrzucker, Milchzucker, Maltose und/oder Raffinose eingesetzt werden.

Weitere Einzelmaßnahmen der hydrothermalen Behandlung können z. B. gemäß DE-A-2 633 597 erfolgen. Zum Beispiel können der Suspension im Autoklaven zusätzlich 0,01 bis 2 Gew.-% Laminatoren wie Polyvinylalkohol oder Ligninsulfonat zugesetzt werden. Nach der Autoklavenbehandlung wird das erhaltene Eisenoxid gewaschen, filtriert und getrocknet, sowie bei Temperaturen zwischen 300 und 600°C mit einem gasförmigen Reduktionsmittel zum Metall reduziert werden.

Das nach dem erfindungsgemäßen Verfahren hergestellte Metallpulver fällt pyrophor an. Es kann selbstverständlich den verschiedensten Nachbehandlungen mit dem Ziel der Stabilisierung gegen Oxidation und/oder der Beeinflussung der Dispergiereigenschaften unterworfen werden.

Die porenarmen Einzelteilchen des Metallpulvers werden zur Herstellung von Magnetogrammträgern (wie Magnetbändern, Platten, Floppy-Disks, Magnetkarten, Identifikationssystemen, sowie als Pigmente für Druckfarben zur magnetischen Informationsaufzeichnung) eingesetzt. Zum Beispiel erhält man bei Einarbeitung dieses Metallpulvers Bänder mit sehr vorteilhaften magnetischen Daten (Remanenz am Band größer 0,25 T, z. B. größer als 0,3 T Ausrichtbarkeit B$_R$/B$_s$ größer als 0,75, z. B. größer als 0,80). Derartige Magnetbänder auf Basis des erfindungsgemäßen Metallpulvers sind — vor allen in Kassetten — vorteilhaft im Audio- und Videobereich (gegebenenfalls neuer Arbeitspunkt) einsetzbar und eignen sich besonders als Masterbänder für Kontakt-Thermokopierverfahren.

Die Erfindung wird nachfolgend anhand von Beispielen näher erläutert.

Beispiel 1

248 Liter Eisensulfatlösung mit 100 g FeSO$_4$/l werden mit 236 g ZnSO$_4$ · 7 H$_2$O in einem Liter Wasser versetzt. Unter Rühren werden innerhalb 10 Minuten 20 Liter Natronlauge mit 390 g NaOH/l zugesetzt. Unter intensivem Rühren und Begasen mit Luft wird innerhalb 6 Stunden bei 54°C die $\alpha$-FeOOH-Keimbildung durchgeführt.

Wenn der pH-Wert unter den Wert 4,0 abgefallen ist, setzt man der Suspension 40 Liter einer Lösung mit 8,97 kg FeSO$_4$ und 46,5 g ZnSO$_4$ zu und erhöht die Temperatur auf 80°C. Innerhalb 9 Stunden erfolgt dann unter Einblasen von Luft und Zugabe von 4 Litern Natronlauge (mit 200 g NaOH/l) je Stunde bei langsam von 3,3 nach 4,2 ansteigendem pH-Wert die $\alpha$-FeOOH-Pigmentbildung. Die Suspension enthält dann 44,9 g FeOOH/l und 15,3 g $FeSO_4$/l. Bei pH = 4,2 wird unter weiterer Luftzufuhr innerhalb 30 Minuten eine Lösung von 238 g $Na_4P_2O_7$ in 8 Litern Wasser zugesetzt. Anschließend wird 30 Minuten nachgerührt, das $\alpha$-FeOOH abfiltriert, sulfatfrei gewaschen und getrocknet.

Eine Probe des so erhaltenen $\alpha$-FeOOH mit einer röntgenographischen mittleren Kristallitgröße 25 nm wird an der Luft entwässert und 30 Minuten bei 760°C als $\alpha$-$Fe_2O_3$ getempert. Anschließend erfolgt während 90 Minuten bei 420°C die Reduktion mit feuchtem Wasserstoff zum Magnetit, der einer abschließenden 30minütigen Temperung bei 700°C unter einem Gemisch von Stickstoff und Kohlendioxid unterworfen wird. Der Magnetit hat folgende Eigenschaften:

| | |
|---|---|
| Nadel | kompakt, porenarm |
| Kristallitgr. | 57,5 nm |
| $H_c$ | (455 (Oe)) 36 300 A/m |
| $Br/\varrho$ | 0,0535 $Tg^{-1}cm^3$ |

Eine Probe des Magnetits wird bei 375°C im Wasserstoffstrom zum Metall reduziert. Das Produkt ist — bezogen auf den Eisengehalt — durchreduziert und besteht aus porenarmen, kompakten Nadeln mit folgenden magnetischen Pulverdaten:

| | |
|---|---|
| $H_c$ | (583 Oe) 46 200 A/m |
| $Br/\varrho$ | 0,1060 $Tg^{-1}cm^3$ |
| $4_\pi B_s/\varrho$ | 0,1868 $Tg^{-1}cm_3$ |
| $Br/4\pi B_s$ | 0,57 |

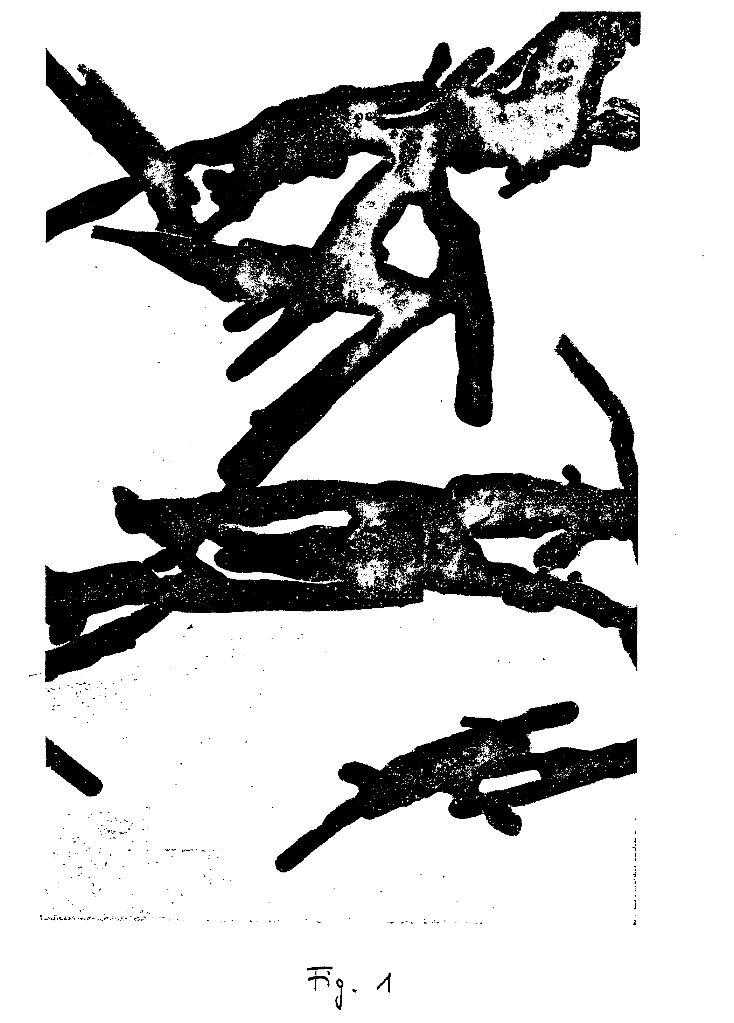

gemessen in einem Feld von 0,28 MA/m (3,5 KOe). Das Produkt ist in Figur 1 in einer mikrophotographischen Aufnahme abgebildet.

### Beispiel 2

Ausgehend von Lösungen wie im Beispiel 1 wird die $\alpha$-FeOOH-Keimbildung unter intensivem Rühren und Begasen mit Luft innerhalb 5 Stunden bei 54°C durchgeführt. Die $\alpha$-FeOOH-Pigmentbildung wird nach Zusatz der $FeSO_4$-$ZnSO_4$-Lösung (wie in Beispiel 1) bei 80°C durch Zugabe von 4 Litern Natronlauge (200 g NaOH/l) pro Stunde in 12,5 Stunden bei langsam von 3,0 nach 3,9 ansteigendem pH-Wert durchgeführt. Dann befinden sich 54,4 g FeOOH und 2,6 g $FeSO_4$ im Liter Suspension. Anschließend erfolgen die Nachbehandlung mit Pyrophosphat und die Aufarbeitung zum fertigen $\alpha$-FeOOH wie im Beispiel 1.

Eine Probe des so erhaltenen $\alpha$-FeOOH (Kristallitgröße 24,5 nm) wird an der Luft entwässert und 30 Minuten bei 760°C als $\alpha$-$Fe_2O_3$ getempert. Anschließend erfolgen während 90 Minuten bei 440°C die Reduktion mit feuchtem Wasserstoff zum Magnetit und dessen abschließende 30minütige Temperung bei 700°C unter Schutzgas. Der Magnetit hat folgende Eigenschaften:

| | |
|---|---|
| Nadel | kompakt, porenarm |
| Kristallitgr. | 48,5 nm |
| $H_c$ | (481 Oe) 38 200 A/m |
| $Br/\varrho$ | 0,0525 $Tg^{-1}cm^3$ |

Eine Probe des Magnetits wird bei 400°C im Wasserstoffstrom zum Metall reduziert. Das Produkt ist — bezogen auf den Eisengehalt — durchreduziert und besteht aus porenarmen, kompakten Nadeln mit folgenden magnetischen Pulverdaten:

| | |
|---|---|
| $H_c$ | (784 Oe) 62 200 A/m |
| $Br/\varrho$ | 0,1186 $Tg^{-1}cm^3$ |
| $4\pi B_s/\varrho$ | 0,1911 $Tg^{-1}cm^3$ |
| $Br/4\pi B_s$ | 0,62 |

gemessen in einem Feld von 0,28 MA/m (3,5 kOe).

### Beispiel 3

325 Liter einer Lösung mit 32,7 kg $FeSO_4$ und 0,925 kg $ZnSO_4 \cdot 7 H_2O$ werden bei 55°C unter Rühren mit einer Lösung von 0,256 kg $NaH_2PO_4 \cdot 2 H_2O$ in 2 Litern Wasser und 30 Liter Natronlauge (0,35 kg NaOH/l) versetzt. Unter intensivem Rühren wird mit einem Gemisch von 1,4 $m^3$ Luft/h und 4,5 $m^3$ Stickstoff/h begast und oxidiert, bis die Suspension eine gelb-braune Färbung angenommen hat.

Ein Teil der Suspension mit einem Gehalt von 1130 g FeOOH wird bei 80°C unter Rühren innerhalb 30 Minuten mit einer Lösung von 21,2 g $Na_4P_2O_7$ in 0,8 Liter versetzt. Es wird 30 Minuten nachgerührt, dann filtriert, sulfatfrei gewaschen und getrocknet.

Das erhaltene $\alpha$-FeOOH (Kristallitgröße 16,5 nm) wird unter Luft entwässert und 30 Minuten bei 680°C als $\alpha$-$Fe_2O_3$ getempert. Anschließend erfolgt während 90 Minuten bei 420–450°C die Reduktion mit feuchtem Wasserstoff zum $Fe_3O_4$. Nach einer abschließenden 30minütigen Temperung bei 600–610°C unter Schutzgas erhält man einen Magnetit mit folgenden Eigenschaften:

| | |
|---|---|
| Nadel | kompakt, porenarm |
| $H_c$ | (387 Oe) 30 760 A/m |
| $Br/\varrho$ | 0,0367 $Tg^{-1}cm^3$ |

Eine Probe dieses Magnetits wird bei 400°C im Wasserstoffstrom zum Metall reduziert. Das Produkt ist — bezogen auf den Eisengehalt — durchreduziert und besteht aus porenarmen, kompakten Nadeln mit folgendem magnetischen Pulverdaten:

| | |
|---|---|
| $H_c$ | (1239 Oe) 99 000 A/m |
| $Br/\varrho$ | 0,1154 $Tg^{-1}cm^3$ |

$4\pi B_s/\varrho$          0,1837 Tg$^{-1}$cm$^3$
Br/$4\pi B_s$          0,63

gemessen in einem Feld von 0,28 MA/m (3,5 kOe).

### Beispiel 4

315 Liter Eisensulfatlösung mit 100 g FeSO$_4$ · 7 H$_2$O/l werden mit 447 g ZnSO$_4$ · 7 H$_2$O in zwei Litern Wasser und kurz vor der Fällung mit 184 g NaH$_2$PO$_4$ · 2 H$_2$O in 1,5 Litern Wasser versetzt. Unter Rühren werden innerhalb etwa 10 Minuten 26,2 Liter Natronlauge mit 390 g NaOH/l zugesetzt. Unter intensivem Rühren und Begasen mit einem Gemisch aus 4,5 m$^3$ Stickstoff/h und 1,5 m$^3$ Sauerstoff/h wird bei 52°C oxidiert bis eine gelbbraune Färbung auftritt. Die so erhaltene Keimsuspension wird unter weiterer Begasung auf 80°C aufgeheizt und bei dieser Temperatur das noch in Lösung befindliche Eisen durch Zusatz von Natronlauge (200 g NaOH/l) ausgefällt. Wenn der pH-Wert von 4,0 unterschritten wird, tropft man bei 80°C unter Hindurchleiten von 6 m$^3$ Luft/h innerhalb 30 Minuten eine Lösung von 276 g Na$_4$P$_2$O$_7$ in fünf Litern Wasser zu, rührt 30 Minuten nach, filtriert das $\alpha$-FeOOH ab, wäscht es sulfatfrei und trocknet es.

Das so erhaltene $\alpha$-FeOOH mit einer röntgenographisch bestimmten mittleren Kristallitgröße von 23,5 nm wird an der Luft entwässert und 30 Minuten bei 700°C als $\alpha$-Fe$_2$O$_3$ getempert. Anschließend erfolgt während 90 Minuten bei 420°C die Reduktion mit feuchtem Wasserstoff zum Magnetit, der abschließend während 30 Minuten bei 760°C unter einem Gemisch von Sauerstoff und Kohlendioxid nachgetempert wird. Der Magnetit hat folgende Eigenschaften:

| Nadel | kompakt, porenarm |
|---|---|
| Kristallitgr. | 41,0 nm |
| H$_c$ | (474 Oe) 37 800 A/m |
| Br/$\varrho$ | 0,0547 Tg$^{-1}$cm$^3$ |

Der Magnetit wird bei 425°C im Wasserstoffstrom zum Metall reduziert. Das Produkt ist — bezogen auf den Eisengehalt — durchreduziert und besteht aus porenarmen, kompakten Nadeln mit folgenden magnetischen Pulverdaten:

| H$_c$ | (929 Oe) 74 000 A/m |
|---|---|
| Br/$\varrho$ | 0,1170 Tg$^{-1}$cm$^3$ |
| $4\pi B_s/\varrho$ | 0,1812 Tg$^{-1}$cm$^3$ |
| Br/$4\pi B_s$ | 0,65 |

gemessen in einem Feld von 0,28 MA/m (3,5 kOe).

### Beispiel 5

Es werden jeweils 500 ml einer 20 g FeOOH enthaltenden wäßrigen Suspension bei Raumtemperatur mit 15 g Glucose, 18 ml einer 4,75 normalen NaOH-Lösung und 0,025 g Polyvinylalkohol als Laminator unter Rühren vermischt. Die Suspension wird in ein Edelstahlgefäß gefüllt und dieses in einem 5 Liter-Autoklaven auf einem Dreifuß über Wasser erhitzt und 2 Stunden bei 290°C Temperatur gehalten. Nach dem Abkühlen wird die erhaltene Eisenoxid-Suspension gewaschen und filtriert. Der Filterrückstand wird redispergiert und mit Na$_2$P$_2$O$_7$ phosphatiert (entsprechend 1 Gew.-% P$_2$O$_5$ bezogen auf Fe$_3$O$_4$). Der nach Filtration und Trocknung erhaltene Magnetit hat folgende Eigenschaften:

| Nadel | porenarm, kompakt |
|---|---|
| Kristallgröße | 43,5 nm |
| H$_c$ | (375 Oe) 30 000 A/m |
| Br/$\varrho$ | 0,0456 Tg$^{-1}$cm$^3$ |

Der Magnetit wird bei 375°C im Wasserstoffstrom zum Metall reduziert. Das Produkt ist — bezogen auf den Eisengehalt — durchreduziert und besteht aus porenarmen kompakten Nadeln mit folgenden magnetischen Pulverdaten:

| H$_c$ | (795 Oe) 63 500 A/m |
|---|---|
| Br/$\varrho$ | 0,1123 Tg$^{-1}$cm$^3$ |
| $4\pi B_s/\varrho$ | 0,2005 Tg$^{-1}$cm$^3$ |
| Br/$4\pi B_s$ | 0,56 |

gemessen in einem Feld von 0,28 MA/m (3,5 kOe).

### Patentansprüche

1. Im wesentlichen aus Eisen bestehendes Metallpulver für die magnetische Signalaufzeichnung, bestehend aus nadelförmigen Einzelteilchen einer Länge von 0,1 bis 2 µ, vorzugsweise von 0,3 bis 1 µ, mit einem Durchmesser von 0,02 bis 0,15 µ, vorzugsweise 0,03 bis 0,1 µ, wobei das Verhältnis von Länge zu Durchmesser zwischen 5 und 20 liegt, dadurch gekennzeichnet, daß die nadelförmigen Einzelteilchen durchschnittlich nicht mehr als eine Pore aufweisen.

2. Metallpulver gemäß Anspruch 1, dadurch gekennzeichnet, daß es zwischen 0,1 und 7 Gew.-% mindestens eines der Elemente Cadmium, Blei, Calcium, Zink, Magnesium, Aluminium, Chrom, Wolfram, Phosphor (gerechnet als P$_2$O$_5$) und/oder Bor (gerechnet als B$_2$O$_3$) enthält.

3. Metallpulver gemäß einem der Ansprüche 1 oder 2, dadurch gekennzeichnet, daß es 0,1 bis 4 Gew.-% Phosphor (gerechnet als P$_2$O$_5$) und 0,1 bis 4 Gew.-% Zink enthält.

4. Metallpulver gemäß einem der Ansprüche 1 bis 3, gekennzeichnet durch ein Rechteckigkeitsverhältnis B$_r$/$4\pi B_s$ von oberhalb 0,55, vorzugsweise oberhalb von 0,6, bei einem Feld von 0,28 M · A/m (3500 Oe).

5. Verfahren zur Herstellung des im wesentlichen aus Eisen bestehenden Metallpulvers für die magnetische Signalaufzeichnung nach einem der Ansprüche 1 bis 4, dadurch gekennzeichnet, daß porenarmes nadelförmiges ferrimagnetisches strukturell stabilisiertes Eisenoxid bei Temperaturen zwischen 300 und 600°C mit einem gasförmigen Reduktionsmittel zum Metall reduziert wird.

6. Verfahren nach Anspruch 5, dadurch gekennzeichnet, daß

a) wäßrige Eisen-(II)-salzlösungen in einer Fällungs- und Oxidationsreaktion in feinteiliges nadelförmiges Eisen-(III)-oxidhydroxid (FeOOH) überführt werden,

b) dieses nadelförmige Eisen-(III)-oxidhydroxid (FeOOH) durch eine chemische Stabilisierung gegen Versinterung in strukturell stabilisiertes Eisen-(III)-oxidhydroxid überführt wird,

c) dieses durch Entwässerung in porenarmes ferrimagnetisches Eisenoxid überführt wird,

d) dieses gemäß Anspruch 5 reduziert wird.

7. Verfahren nach einem der Ansprüche 5 oder 6, dadurch gekennzeichnet, daß Fällung und Oxidation zur Gewinnung des Eisen-(III)-oxidhydroxid bei einem pH-Wert unter 7 durchgeführt werden, bei Erreichen eines pH-Wertes von kleiner als 4 die Oxidation abgebrochen wird.

8. Verfahren nach einem der Ansprüche 5 bis 7, dadurch gekennzeichnet, daß zur chemischen Stabilisierung des FeOOH gegen Versinterung mindestens eine in der Fällungssuspension lösliche Verbindung mindestens eines der Elemente, Cadmium, Blei, Calcium, Magnesium, Zink, Aluminium, Chrom, Wolfram und/oder eine Sauerstoffverbindung des Bors sowie wasserlösliche Phosphorverbindungen eingesetzt werden.

9. Verfahren nach Anspruch 8, dadurch gekennzeichnet, daß die chemische Stabilisierung des FeOOH gegen Versinterung durch die Stabilisierungssubstanzen vor Abtrennung des FeOOH aus der Fällungssuspension erfolgt.

10. Verfahren nach Anspruch 8, dadurch gekennzeichnet, daß die Stabilisierungssubstanzen der Fällungs-Suspension vor Abschluß der Fällungs- und Oxidationsreaktion zugegeben werden.

11. Verfahren nach einem der Ansprüche 9 oder 10, dadurch gekennzeichnet, daß zur chemischen Stabilisierung des FeOOH gegen Versinterung Zink- und Phosphorverbindungen eingesetzt werden.

12. Verfahren nach einem der Ansprüche 6 bis 11, dadurch gekennzeichnet, daß alpha-FeOOH gebildet wird, welches eine röntgengraphisch bestimmte mittlere Teilchengröße zwischen 12 und 32 nm aufweist.

13. Verfahren nach einem der Ansprüche 5 bis 12, dadurch gekennzeichnet, daß das alpha-FeOOH nach der Entwässerung einer Temperaturbehandlung zwischen 600 und 900°C unter Inertgas unterzogen wird, anschließend mit feuchtem Wasserstoff bei 300 bis 600°C zu $Fe_3O_4$ reduziert wird, und danach als ferrimagnetisches Oxid durch eine Temperaturbehandlung zwischen 600 und 800°C strukturell stabilisiert wird, wobei die Stabilisierung gegebenenfalls eine zumindest partielle Reoxidation zum gamma-$Fe_2O_3$ umfassen kann.

14. Verfahren nach einem der Ansprüche 5 bis 13, dadurch gekennzeichnet, daß die Überführung des FeOOH zum ferrimagnetischen Eisenoxid sowie dessen strukturelle Stabilisierung dadurch erfolgt, daß das FeOOH in Gegenwart von Alkali- oder Erdalkalihydroxid bzw. -carbonat und überschüssigem Wasser in einen Autoklaven auf Temperaturen oberhalb 100°C, vorzugsweise oberhalb 200°C, erhitzt wird und die erhaltenen ferrimagnetischen Eisenoxide anschließend ausgewaschen, filtriert und getrocknet werden.

**Claims**

1. A metal powder consisting essentially of iron for magnetic signal recording, consisting of acicular individual particles having a length of 0.1 to 2 $\mu$, preferably 0.3 to 1 $\mu$ and a diameter of 0.02 to 0.15 $\mu$, preferably 0.03 to 0.1 $\mu$, the ratio of length to diameter being between 5 and 20, characterised in that the acicular individual particles have on average not more than one pore.

2. A metal powder according to Claim 1, characterised in that it contains between 0.1 and 7% by weight of at least one of the elements cadmium, lead, calcium, zinc, magnesium, aluminium, chromium, tungsten, phosphorus (expressed as $P_2O_5$) and/or boron (expressed as $B_2O_3$).

3. A metal powder according to one of Claims 1 or 2, characterised in that it contains 0.1 to 4% by weight of phosphorus (expressed as $P_2O_5$) and 0.1 to 4% by weight of zinc.

4. A metal powder according to one of Claims 1 to 3, characterised by a squareness ratio $B_r/4\pi B_s$ of greater than 0.55, preferably greater than 0.6, for a field of 0.28 M · A/m (3500 Oe).

5. Process for the production of the metal powder consisting essentially of iron for magnetic signal recording, according to one of Claims 1 to 4, characterised in that acicular, ferrimagnetic structuralle stabilised iron oxide of a low pore content is reduced to the metal with a gaseous reducing agent at temperatures between 300 and 600°C.

6. Process according to Claim 5, characterised in that

a) aqueous iron(II) salt solutions are converted into finely divided acicular iron(III) oxide hydroxide (FeOOH) in a precipitation and oxidation reaction,

b) this acicular iron(III) oxide hydroxide (FeOOH) is converted by chemical stabilisation against sintering into structurally stabilised iron(III) oxide hydroxide,

c) this is converted by dehydration into ferrimagnetic iron oxide with a low pore content, and
d)   this is reduced according to Claim 5.

7. Process according to one of Claims 5 or 6, characterised in that precipitation and oxidation to form the iron(III) oxide hydroxide are carried out at a pH-value of below 7 and oxidation is terminated when a pH-value of less than 4 is reached.

8. Process according to one of Claims 5 to 7, characterised in that at least one compound soluble in the precipitation suspension of at least one of the elements cadmium, lead, calcium, magnesium, zinc, aluminium, chromium, tungsten and/or an oxygen compound of boron or water-soluble phosphorus compounds are used for chemically stabilising the FeOOH against sintering.

9. Process according to Claim 8, characterised in that the chemical stabilisation of the FeOOH against sintering with the stabilising substances is carried out before the FeOOH is separated from the precipitation suspension.

10. Process according to Claim 8, characterised in that the stabilising substances are added to the precipitation suspension before termination of the precipitation and oxidation reaction.

11. Process according to one of Claims 9 or 10, characterised in that zinc and phosphorus compounds are used for chemically stabilising the FeOOH against sintering.

12. Process according to one of Claims 6 to 11, characterised in that alpha-FeOOH is formed which has an average particle size of between 12 and 32 nm, determined by X-ray diffraction.

13. Process according to one of Claims 5 to 12, characterised in that the alpha-FeOOH, after dehydration, is subjected to a heat treatment at between 600 and 900°C in an inert gas, then reduced to $Fe_3O_4$ with moist hydrogen at 300 to 600°C, and then structurally stabilised as ferrimagnetic oxide by a heat treatment at between 600 and 800°C, it being possible for the stabilisation to optionally comprise at least partial reoxidation to gamma-$Fe_2O_3$.

14. Process according to one of Claims 5 to 13, characterised in that the FeOOH is converted into ferrimagnetic oxide and structurally stabilised by heating the FeOOH in an autoclave to temperatures above 100°C, preferably above 200°C, in the presence of an alkali metal or alkaline earth metal hydroxide or carbonate and excess water and washing out, filtering and drying the ferrimagnetic iron oxides obtained.

**Revendications**

1. Poudre métallique constituée essentiellement de fer pour l'enregistrement magnétique de signaux, cette poudre étant constituée de particules individuelles en forme d'aiguilles d'une longueur de 0,1 à 2 μ, de préférence, de 0,3 à 1 μ, avec un diamètre de 0,02 à 0,15 μ, de préférence, de 0,03 à 0,1 μ, le rapport entre la longueur et le diamètre se situant entre 5 et 20, caractérisée en ce que, en moyenne, les particules individuelles en forme d'aiguilles ne comportent pas plus d'un pore.

2. Poudre métallique suivant la revendication 1, caractérisée en ce qu'elle contient entre 0,1 et 7% en poids d'au moins un des éléments choisis parmi le cadmium, le plomb, le calcium, le zinc, le magnésium, l'aluminium, le chrome, le tungstène, le phosphore (calculé en $P_2O_5$) et/ou le bore (calculé en $B_2O_3$).

3. Poudre métallique suivant une des revendications 1 ou 2, caractérisée en ce qu'elle contient 0,1 à 4% en poids de phosphore (calculé en $P_2O_5$) et 0,1 à 4% en poids de zinc.

4. Poudre métallique suivant une des revendications 1 à 3, caractérisée en ce qu'elle a un rapport de rectangularité $B_r/4\pi B_s$ de plus de 0,55, de préférence, de plus de 0,6, en présence d'un champ de 0,28 MA/m (3500 Oe).

5. Procédé de préparation de la poudre métallique constituée essentiellement de fer pour l'enregistrement magnétique de signaux suivant une des revendications 1 à 4, caractérisé en ce que l'oxyde de fer pauvre en pores, en forme d'aiguilles, ferrimagnétique et stabilisé dans sa structure est réduit en métal à des températures comprises entre 300 et 600°C avec un agent réducteur gazeux.

6. Procédé suivant la revendication 5, caractérisé en ce que:

a)   au cours d'une réaction de précipitation et d'oxydation, on transforme des solutions aqueuses de sels de fer(II) en oxydohydroxyde de fer(III) (FeOOH) finement divisé en forme d'aiguilles,

b)   moyennant une stabilisation chimique contre le frittage, on transforme cet oxydohydroxyde de fer(III) (FeOOH) en forme d'aiguilles en oxydohydroxyde de fer(III) stabilisé dans sa structure,

c)   on transforme ce dernier en oxyde de fer ferrimagnétique pauvre en pores par déshydratation,

d)   on soumet ce dernier à une réduction suivant la revendication 5.

7. Procédé suivant une des revendications 5 ou 6, caractérisé en ce qu'on effectue la précipitation et l'oxydation en vue d'obtenir l'oxydohydroxyde de fer(III) à un pH inférieur à 7, l'oxydation étant interrompue lorsqu'on atteint un pH inférieur à 4.

8. Procédé suivant une des revendications 5 à 7, caractérisé en ce que, pour la stabilisation chimique du FeOOH contre le frittage, on utilise au moins un composé (soluble dans la suspension de précipitation) d'au moins un des éléments choisis parmi le cadmium, le plomb, le calcium, le magnésium, le zinc, l'aluminium, le chrome, le tungstène et/ou un composé oxygéné du bore, de même que des composés hydrosolubles de phosphore.

9. Procédé suivant la revendication 8, caractérisé en ce que la stabilisation chimique du FeOOH contre le frittage a lieu au moyen des substances de stabilisation avant de séparer le FeOOH de la suspension de précipitation.

10. Procédé suivant la revendication 8, caractérisé en ce que les substances de stabilisation sont ajoutées à la suspension de précipitation avant la fin de la réaction de précipitation et d'oxydation.

11. Procédé suivant une des revendications 9 et 10, caractérisé en ce que, pour la stabilisation chimique du FeOOH contre le frittage, on utilise des composés de zinc et de phosphore.

12. Procédé suivant une des revendications 6 à 11, caractérisé en ce qu'on forme de l'$\alpha$-FeOOH en particules d'une granularité moyenne (déterminée aux rayons X) se situant entre 12 et 32 nm.

13. Procédé suivant une des revendications 5 à 12, caractérisé en ce que, après la déshydratation, on soumet l'$\alpha$-FeOOH à un traitement thermique à une température comprise entre 600 et 900°C sous une atmosphère d'un gaz inerte puis, avec de l'hydrogène humide et à une température de 300 à 600°C, on le réduit en $Fe_2O_4$ dont on stabilise ensuite la structure sous forme d'oxyde ferrimagnétique moyennant un traitement thermique à une température comprise entre 600 et 800°C, la stabilisation pouvant comporter éventuellement une réoxydation au moins partielle en $\gamma$-$Fe_2O_3$.

14. Procédé suivant une des revendications 5 à 13, caractérisé en ce que la transformation du FeOOH en oxyde de fer ferrimagnétique, de même que la stabilisation structurale de ce dernier sont effectuées en chauffant le FeOOH dans un autoclave à des températures supérieures à 100°C, de préférence, supérieures à 200°C en présence d'un hydroxyde ou d'un carbonate d'un métal alcalin ou d'un métal alcalino-terreux et d'un excès d'eau, après quoi, moyennant un lavage, on sépare les oxydes de fer ferrimagnétiques obtenus, puis on les filtre et on les sèche.

Fig. 1

Fig. 2

Fig. 3